# EUROPÄISCHE PATENTANMELDUNG

(11) **EP 0 678 318 A2**
(43) Veröffentlichungstag der Anmeldung: **25.10.1995**
(21) Anmeldenummer: 95105430.3
(22) Anmeldetag: 11.04.1995
(51) Int. Cl.: B01D 27/08, B01D 29/11, B01D 46/24

(54) **Filter und dafür vorgesehene Filterpatrone**

(30) Priorität: 20.04.1994 DE 4413589
(71) Anmelder: Reuschling, Walter, D-74861 Neudenau (DE)
(72) Erfinder: Reuschling, Walter, D-74861 Neudenau (DE)
(74) Vertreter: Otten, Hajo, Dr.-Ing.

(57) **Zusammenfassung**

Ein Filter zum Filtern von gasförmigen und/oder flüssigen Medien, insbesondere ein Nebenstrom-Ölfilter (10) für Verbrennungsmotoren, umfaßt ein Filtergehäuse (11), das für die Aufnahme und Halterung eines Filtereinsatzes bzw. einer Filterpatrone (12) eingerichtet ist. Das Filtergehäuse (11) weist ein Gehäuseteil (17), ein Bodenteil (15), ein Deckelteil (16) sowie eine Einlaßöffnung (42) und eine in dem Bodenteil (15) angeordnete Auslaßöffnung (24) für das Medium auf. Das Gehäuseteil (17) ist ein Rohrstück (18), wobei das Deckelteil und das Bodenteil (15) als im wesentlichen identische Deckel (19) ausgebildet sind, die direkt miteinander verschraubbar sind, um die Filterpatrone (12) zwischen sich einzuklemmen. Die verwendete Filterpatrone umfaßt eine perforierte Innenhülse (13), auf die Filtermaterial (14) aufgebracht ist. Die Innenhülse (13) ist im wesentlichen aus einem Lochblech aus Metall oder Kunststoff gefertigt.

## Beschreibung

Die vorliegende Erfindung betrifft einen Filter zum Filtern von gasförmigen und/oder flüssigen Medien, insbesondere einen Nebenstrom-Ölfilter für Verbrennungsmotoren, mit einem Filtergehäuse, das ein Gehäuseteil, ein Bodenteil, ein Deckelteil sowie eine Einlaßöffnung und eine in dem Bodenteil angeordnete Auslaßöffnung für das Medium aufweist, und das für die Aufnahme und Halterung eines Filtereinsatzes bzw. einer Filterpatrone eingerichtet ist.

Ein derartiger Filter ist bspw. aus der DE-C-39 13 095 bekannt.

Die Erfindung betrifft ferner eine Filterpatrone mit einer perforierten Innenhülse, auf die Filtermaterial aufgebracht ist.

Derartige Filterpatronen, die vorzugsweise zur Verwendung in dem oben genannten Filter vorgesehen ist, beschreibt die DE-C-37 42 253.

Diese Filter werden bspw. zur Feinstfilterung des Motorenöles und zur Verbesserung der Ölreinheit neben einem Hauptstromfilter als sogenannte Nebenstrom-Ölfilter bei Verbrennungsmotoren verwendet. Die bekannten Filter können aber auch zur Filterung anderer flüssiger oder gasförmiger Medien verwendet werden.

Wenn sie als Nebenstrom-Ölfilter verwendet werden, bestehen die Filter in der Regel aus einem Gehäuse, in das ein Filtereinsatz oder eine Filterpatrone eingesetzt wird, die aus einer perforierten Pappröhre mit einem aufgewickelten Filterpapier besteht.

Der aus der eingangs genannten DE-C-39 13 095 bekannte Filter umfaßt eine von dem Ölstrom radial durchströmte Filterpatrone, die in ein einteiliges Aluminium-Gußgehäuse mit Deckel eingesetzt ist. Sowohl die Einlaß- als auch die Auslaßöffnung befinden sich in dem einstückig mit dem Gehäuse ausgebildeten Bodenteil, wobei die Auslaßöffnung zentrisch und die Einlaßöffnung im Randbereich des Bodenteiles untergebracht ist. Eine innen auf dem Gehäuseboden vorgesehene Leitrippe verhindert, daß das einströmende Öl direkt auf die Filterpatrone auftrifft und diese ggf. beschädigt.

Wie der Deckel und die Filterpatrone in dem Gehäuse befestigt werden, ist in dieser Druckschrift offengelassen. Es ist jedoch aus der Praxis bekannt, daß bei dem bekannten Filter der Deckel mit einem Außengewinde versehen ist und in ein oben an dem Gehäuse vorgesehenes Stutzenteil mit Innengewinde eingeschraubt wird.

Bei diesem Filter wird als nachteilig empfunden, daß für verschiedene Filtergrößen verschiedene Gehäuse erforderlich sind, die jeweils mit eigenen Werkzeugen hergestellt werden müssen, was teuer und aufwendig ist. Ferner ist der voluminöse Deckel schlecht mit der Hand zu ergreifen, wobei ebenfalls eine große Kraftanstrengung erforderlich ist, um den Deckel zu lösen oder fest zu schließen. Dies ist insbesondere dann von Nachteil, wenn der Filter schwer zugänglich montiert ist, wie es häufig vorkommt.

Aus der Praxis ist es ferner bekannt, daß nach dieser Druckschrift gefertigte Filtergehäuse sehr voluminös sind, wobei außerdem trotz der Leitrippe ein großer axialer Abstand zwischen Boden/Deckel einerseits und Stirnfläche der Filterpatrone andererseits einzuhalten ist, damit das axial zugeführte Öl nicht auf die Stirnfläche der Filterpatrone auftrifft, sondern sich in dem Spalt zwischen der Gehäusewand und dem Zylindermantel der Filterpatrone verteilt.

Derartige Nebenstrom-Ölfilter werden jedoch häufig bei Fahrzeugen nachgerüstet, die nur ein sehr geringes Platzangebot im Motorraum aufweisen, so daß bei vorgegebener Filtergröße das Filtergehäuse so klein wie möglich sein soll.

Ein weiterer Filter mit radial durchströmter Filterpatrone ist aus der DE-C-34 21 399 bekannt. Bei diesem Filter besteht das Filtergehäuse aus einem Rohrstück und einem damit verschweißten Bodenteil. An dem Bodenteil ist ein Zentrierblock vorgesehen, von dem sich ein Ablaufrohr nach oben erstreckt. Die Filterpatrone wird über das Ablaufrohr und den Zentrierblock gestülpt und an dem Boden mittels eines oberen Zentrierteiles befestigt, das auf das Ablaufrohr aufgeschraubt wird und die Filterpatrone zwischen sich und dem Bodenteil einklemmt.

Anschließend wird der von dem Bodenteil verschiedene Deckel auf das offene obere Ende des Rohrstückes aufgesetzt und durch Überwurfschellen am Gehäuse befestigt.

Bei diesem Filter ist von Nachteil, daß er sehr unhandlich ist und daß das Auswechseln der Filterpatrone sehr viel Zeit erfordert. Der Deckel und die Filterpatrone müssen nämlich gesondert befestigt bzw. gelöst werden. Ferner muß zum Austausch der Filterpatrone entweder Öl abgelassen werden oder aber in das Öl hineingegriffen werden, um das obere Zentrierteil zu lösen.

Wegen der Verwendung von Überwurfschellen ist an dem Deckel eine gesonderte Ansatzöffnung für ein Werkzeug vorgesehen, womit der Deckel abgehoben werden muß. Auch dies stört die Handhabung des bekannten Filters.

Wegen des gesondert in dem Gehäuse angeordneten oberen Zentrierteiles mit eigener Mutter ist das Gehäuse verglichen mit der verwendeten Filterpatrone sehr hoch, so daß es diesbezüglich dieselben Nachteile aufweist wie der eingangs diskutierte Filter.

Aus der DE-A-40 30 304 ist ein Filter mit axial durchströmter Filterpatrone bekannt. Bei diesem Filter ist das Filtergehäuse ein Rohr mit zwei endseitigen Flanschen, an denen identische Deckel jeweils mit Hilfe mehrerer Maschinenschrauben befestigt werden. Der obere Deckel enthält einen axialen Ölzulauf und der untere Deckel einen axialen Ölablauf. Drahtnetze zwischen den Deckeln und der Filterpatrone sorgen für eine Verteilung des Öles über der Stirnfläche der Filterpatrone, um eine gleichmäßige Filterwirkung zu erzielen.

Die Deckel weisen ferner je eine radial umlaufende Schneide zur Halterung der Filterpatrone auf, die selbst mit querverlaufenden Stabilisierungsstäben sowie einem rohrförmigen Kern versehen ist, so daß gemäß dieser Offenlegungsschrift ein Teil des Öles die Filterpatrone auch radial durchsetzt und so gefiltert werden soll.

Wegen der vielen Maschinenschrauben ist dieser Filter unhandlich zu öffnen, wobei weiter von Nachteil ist, daß dazu ein Schraubenschlüssel benötigt wird, der unter einigen Einsatzbedingungen nicht problemlos angesetzt werden kann. Wegen der Flansche an dem Rohr ist auch hier für jedes gesonderte Volumen ein eigenes Werkzeug zur Herstellung des Gehäuses erforderlich. Darüber hinaus erfordert dieser Filter eine kompliziert aufgebaute und damit teure Filterpatrone.

Aus der DE-C-38 42 017 ist ein baukastenartig aufgebauter Filter bekannt, der mit mehreren axial übereinander angeordneten Filterpatronen zusammengebaut werden kann. Dieser Filter entspricht von der Konstruktion her dem aus der DE-A-40 30 304 bekannten Filter, der oben bereits beschrieben wurde. Stufenweise verschiedene Gehäusegrößen werden dadurch realisiert, daß mehrere mit Flanschen versehene Rohrabschnitte axial aufeinandergesetzt und miteinander verschraubt werden. Damit weist dieser Filter bei der Fertigung und Wartung die gleichen Nachteile auf wie der oben beschriebene Filter.

Allgemein ist bekannt, daß axial durchströmte Filterpatronen den Nachteil haben, daß dem Ölstrom zum einen nur eine geringe Filterfläche dargeboten wird, daß aber die Strecke, die das Medium während der Filterung zu durchlaufen hat, relativ groß ist. Im Betrieb setzen sich nun die oberen Teile von axial durchströmten Filterpatronen schnell zu, so daß der Strömungswiderstand dieser Filter sehr schnell größer wird und der Medienfluß schließlich ganz zum Erliegen kommt. Der untere Bereich der Filterpatrone ist dann jedoch noch nicht mit Schmutzpartikeln durchsetzt, so daß axial durchströmte Filter keine optimale Ausnutzung des Volumens der Filterpatrone gewährleisten. Radial durchströmte Filterpatronen, wie sie bspw. aus der eingangs genannten DE-C-37 42 253 bekannt sind, haben dagegen eine größere Filteroberfläche, nämlich die Mantelfläche der Patrone, und eine geringere Filterstrecke, nämlich die Manteldicke der Filterpatrone. Dies führt dazu, daß das Volumen der Filterpatrone besser ausgenutzt werden kann.

Die eingangs genannte Filterpatrone besteht aus einer perforierten Papphülse, auf die Filterpapier aufgewickelt ist. In dem Inneren der Papphülse ist eine Schraubenfeder vorgesehen, die die Papphülse stabilisiert, so daß sie nicht zusammengedrückt wird, wenn sie vom Öl durchweicht dem Druck im Inneren des Filters ausgesetzt wird. Aus Stabilitätsgründen und fertigungstechnisch bedingt sind der obere und der untere Bereich der Papphülse nicht mit Perforationslöchern versehen, so daß bis zu 30 % der Filterpatrone zur Filterung nicht zur Verfügung stehen.

Hier ist von Nachteil, daß die Filterpatrone immer noch schlecht ausgenutzt wird. Dies führt zu einer großen Bauhöhe des die Filterpatrone aufnehmenden Filtergehäuses und zu einer Verschwendung von Filtermaterial. Ferner ist zu bedenken, daß sich nicht nur das Filtermaterial sondern auch die Papphülse mit Öl vollsaugt, so daß der Ölverlust beim Wechseln der Filterpatrone von dem Volumen des Filtermaterials und dem der Papphülse abhängt. Wenn nun ein Teil des Filtermaterials seine Filterwirkung gar nicht entfalten kann, sich aber dennoch mit Öl vollsaugt, so führt dies zu einem unerwünscht hohen Ölverbrauch beim Wechseln der Filterpatrone. Da die bekannten Nebenstrom-Ölfilter jedoch zum einen aus Umweltschutzgründen und zum anderen aus Gründen der Kostenersparnis eingesetzt werden, besteht hier ein Bedarf an Abhilfe.

Vor diesem Hintergrund ist es Aufgabe der vorliegenden Erfindung, den eingangs genannten Filter dahingehend weiterzubilden, daß das Auswechseln der Filterpatrone auch bei schwer zugänglichen Filtern ohne großen Kraftaufwand möglich ist. Ferner sollen verschiedene Filtervolumina mit geringem produktionstechnischen Aufwand möglich sein, wobei der Filter selbst bei gegebenem Ölvolumen bzw. Filterpatronenvolumen so klein wie möglich sein soll. Ferner ist eine gute Ausnutzung der Filterpatrone angestrebt, um die Wartungsintervalle zu vergrößern.

Bei dem eingangs spezifizierten Filter wird diese Aufgabe dadurch gelöst, daß das Gehäuseteil ein Rohrstück ist, und daß das Deckelteil und das Bodenteil als im wesentlichen identische Deckel ausgebildet sind, die direkt miteinander verschraubbar sind, um den Filtereinsatz bzw. die Filterpatrone zwischen sich einzuklemmen.

Bezüglich der eingangs erwähnten Filterpatrone wird die Aufgabe dadurch gelöst, daß die Innenhülse im wesentlichen aus einem Lochblech aus Metall oder Kunststoff gefertigt ist.

Die der Erfindung zugrundeliegende Aufgabe wird auf diese Weise vollkommen gelöst. Weil bei dem neuen Filtergehäuse Deckelteil und Bodenteil im wesentlichen identische Deckel sind, ist für die Herstellung nur ein einziges Werkzeug erforderlich; dies spart Produktionskosten. Da das Gehäuseteil selbst ein einfaches Rohrstück ist, können verschiedene Filtervolumina dadurch eingestellt werden, daß von einem Endlosrohr Rohrstücke unterschiedlicher Länge abgelängt werden. Der neue Filter kann also auf einfache Weise bezüglich des aufgenommenen Volumens eingestellt werden. Während beim Stand der Technik jeweils für neue Filtergehäuse, die sich z. B. kurzfristig aufgrund spezifischer Anforderungen ergeben können, neue Werkzeuge hergestellt werden mußten, kann der neue Filter sozusagen unmittelbar vor Ort an das erforderliche Volumen angepaßt werden. Dies reduziert darüber hinaus die Lagerhaltung, es sind lediglich Deckel und Rohrstücke zu lagern, die später noch abgelängt werden können. Streuungen in der Bauhöhe der Filterpatronen werden dadurch ausgeglichen, daß der obere Deckel ggf. nicht auf dem Rohrstück aufliegt, sondern um einen Spalt zu diesem beabstandet ist.

Die Einlaßöffnung kann sich weiterhin in einem der beiden Deckelteile befinden, wozu es lediglich erforderlich ist, in dieses Deckelteil eine Gewindebohrung einzubringen. Auf diese Weise können sowohl axial durchströmte Filter als auch radial durchströmte Filter verwendet werden, bei denen dann die Einlaßöffnung so im Randbereich des Deckels untergebracht werden muß, daß das einströmende Öl nicht direkt auf die Filterpatrone trifft.

Auch die neue Filterpatrone trägt zur Lösung der Aufgabe bei, denn die aus Metall oder Kunststoff gefertigte Innenhülse ist so stabil, daß sie längs ihrer gesamten Höhe mit einer Perforation versehen werden kann. Auf diese Weise wird verhindert, daß in den axialen Randbereichen der Filterpatrone Filtermaterial vorhanden ist, das sich zwar mit Öl vollsaugt, nicht aber zur Filterwirkung beiträgt. Mit anderen Worten, die neue Filterpatrone kann verglichen mit dem Stand der Technik bei gleicher Filterwirkung und bei gleichen Wartungsintervallen mit geringerer Bauhöhe ausgelegt werden, so daß insbesondere durch das Zusammenwirken der neuen Filterpatrone und des neuen Gehäuses ein Filter mit sehr geringer Bauhöhe bei vorgegebenem Filtervolumen entsteht.

Bei dem neuen Filter ist es dann bevorzugt, wenn an dem Rohrstück seitlich in seiner Wand die Einlaßöffnung angeordnet ist.

Hier ist von Vorteil, daß die seitliche Zufuhr des Mediums durch die Wand des Rohrstückes die Bauhöhe reduziert, so daß das neue Filtergehäuse verglichen mit bekannten Filtergehäusen bei vorgegebener Filterpatrone kleiner sein kann.

Bezüglich des neuen Filters ist es weiter bevorzugt, wenn die Deckel über eine Zugstangenanordnung miteinander verschraubbar sind.

Diese Maßnahme ist insbesondere im Hinblick auf eine leichte Handhabung von Vorteil, denn eine Zugstangenverschraubung ist leichter zu lösen, als ein Deckel zu drehen ist. Darüber hinaus kann der Deckel jetzt eine geringere Höhe aufweisen als beim Stand der Technik, da keine Außengewinde an den Deckeln mehr erforderlich sind. Dadurch reduziert sich die Bauhöhe des neuen Filters noch einmal merklich.

In einem weiteren Ausführungsbeispiel ist es bevorzugt, wenn die Zugstangenanordnung eine innen an dem als Bodenteil dienenden Deckel angeordnete Hülse mit Innengewinde umfaßt, in die einen Endes eine Zugstange einschraubbar ist und die anderen Endes mit der Auslaßöffnung kommuniziert, wobei die Hülse eine seitliche Kalibrierbohrung aufweist, über die das Medium zu der Auslaßöffnung gelangt, wobei vorzugsweise an dem als Deckelteil dienenden Deckel innen drehbar ein Teil gelagert ist, das eine Gewindesackbohrung zur Aufnahme der Zugstange aufweist und von außen drehbar ist.

Hier ist von Vorteil, daß diese Maßnahmen konstruktiv sehr einfach sind und bei geringer Bauhöhe ein einfaches Auswechseln der Filterpatrone ermöglichen. Das drehbar gelagerte Teil muß nämlich lediglich von außen von der Zugstange abgeschraubt werden, woraufhin der Deckel an dem drehbar gelagerten Teil gefaßt und von dem Filtergehäuse abgehoben werden kann. Die Zugstange verbleibt dabei in der an dem Bodenteil vorgesehenen Hülse. Die Filterpatrone kann jetzt herausgenommen und eine neue Filterpatrone in das Filtergehäuse eingesetzt werden. Alternativ ist es natürlich auch möglich, daß die Zugstange, die im einfachen Fall eine Gewindestange ist, aus der an dem Bodenteil vorgesehenen Hülse herausgeschraubt und zusammen mit dem Deckelteil aus dem Filtergehäuse herausgenommen wird. Die Gewindestange wird zu diesem Zweck entweder in der Hülse oder in der Gewindesackbohrung fixiert.

Ferner ist es bevorzugt, wenn innen an jedem Deckel zumindest eine, vorzugsweise zwei axial vorspringende und radial zumindest teilweise umlaufende Schneiden vorgesehen sind, die vorzugsweise auf einem vorspringenden Bund sitzen und zusammen mit diesem den Filtereinsatz bzw. die Filterpatrone fixieren und mit einem axialen Spalt zu dem Deckel beabstandet halten.

Die in das Filtermaterial eindringenden Schneiden sorgen auf vorteilhafte Weise für eine Abdichtung, so daß kein ungefiltertes Öl zwischen dem Deckel und der Stirnfläche der Filterpatrone durchtreten kann.

Neben der mechanischen Fixierung ist hier weiter von Vorteil, daß die Filterpatrone auch in ihren axialen Randbereichen eine gewisse zusätzliche Filterwirkung entfaltet. Das Medium gelangt nämlich beim Einfließen in das Filtergehäuse auch in den axialen Spalt zwischen Deckel und Filterpatrone und tritt von dort über die Stirnfläche der Filterpatrone in diese ein. Dies bedeutet aber, daß für den neuen Filter nicht nur die neue Filterpatrone, sondern auch Filterpatronen aus dem Stand der Technik verwendet werden können, bei denen das an der Filterwirkung teilnehmende Volumen durch diesen axialen Spalt deutlich erhöht wird. Bei gleicher Bauhöhe und bei Verwendung konventioneller Filterpatronen zeigt der neue Filter damit eine länger andauernde Filterwirkung, so daß die Wartungsintervalle vergrößert werden können.

Dabei ist es bevorzugt, wenn das Rohrstück im Bereich der Einlaßöffnung zur Bildung eines Verteilerraumes für das Medium nach außen vorgewölbt oder ausgestülpt ist, und wenn eine Umlenkvorrichtung vorgesehen ist, die das überwiegend radial einströmende Medium umlenkt.

Diese Maßnahme hat den Vorteil, daß ohne die Bauhöhe zu vergrößern dafür gesorgt wird, daß das Medium nicht direkt auf das Filtermaterial auftrifft, dieses aufweicht und schließlich Teile des Filtermaterials ablöst, die die Auslaßöffnung verstopfen könnten.

Die Umlenkvorrichtung kann dabei entweder ein Prallblech oder eine Hohlschraubenanordnung umfassen, bei der ein winklig verlaufender Einlaßkanal vorgesehen ist.

Für die Handhabung ist es ferner von Vorteil, wenn der als Bodenteil dienende Deckel unverlierbar, vorzugsweise über Nieten an dem Rohrstück befestigt ist.

Bei der neuen Filterpatrone ist es weiter bevorzugt, wenn in die Innenhülse an ihren beiden axialen Enden jeweils ein Pappring eingesetzt ist.

Hier ist von Vorteil, daß die Verformbarkeit des Pappringes beim Verspannen der Filterpatrone zwischen den beiden Deckeln genutzt werden kann, so daß eine gute und dichte Anlage zwischen Filterpatrone und Deckel erreicht wird. Wegen der geringen Höhe des Pappringes sind jedoch die bei perforierten Papphülsen aus dem Stand der Technik bekannten Nachteile nicht vorhanden.

Dabei ist es ferner bevorzugt, wenn im Bereich der axialen Enden Teile der Innenhülse als Laschen nach innen gebogen sind, um die Pappringe axial zu halten.

Hier ist von Vorteil, daß einfache konstruktive Maßnahmen ergriffen werden können, um ein axiales Verschieben der Pappringe zu verhindern.

Aus dem Obenstehenden ergibt sich, daß das neue Filtergehäuse vorteilhaft zusammen mit der neuen Filterpatrone verwendet werden kann, um einerseits leicht veränderbare und dabei doch geringe Bauhöhen bei vorgegebenem Filtervolumen zu erreichen, wobei sich die Bauhöhe dadurch weiter verringert, daß das gesamte Volumen der Filterpatrone an der Filterwirkung teilhat. Einige dieser Vorteile ergeben sich jedoch auch dann, wenn das neue Filtergehäuse mit bekannten Filterpatronen oder die neue Filterpatrone in bekannten Filtergehäusen verwendet werden.

Weitere Vorteile ergeben sich aus der Beschreibung und der beigefügten Zeichnung.

Es versteht sich, daß die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: einen Längsschnitt durch einen neuen Filter mit schematisch angedeutiger neuer Filterpatrone;
- Fig. 2: einen abgebrochenen Längsschnitt durch die neue Filterpatrone aus Fig. 1;
- Fig. 3: eine ausschnittsweise und vergrößerte Darstellung eines weiteren Ausführungsbeispieles des neuen Filters aus Fig. 1, im Bereich der Öleinlaßöffnung und mit einem Ausführungsbeispiel einer Umlenkvorrichtung;
- Fig. 4: in einer Darstellung wie Fig. 3 ein weiteres Ausführungsbeispiel der Umlenkvorrichtung;
- Fig. 5: in einer Darstellung wie Fig. 4 ein drittes Ausführungsbeispiel der Umlenkeinrichtung; und
- Fig. 6: eine vergrößerte Darstellung des Merkmales VI aus Fig. 1.

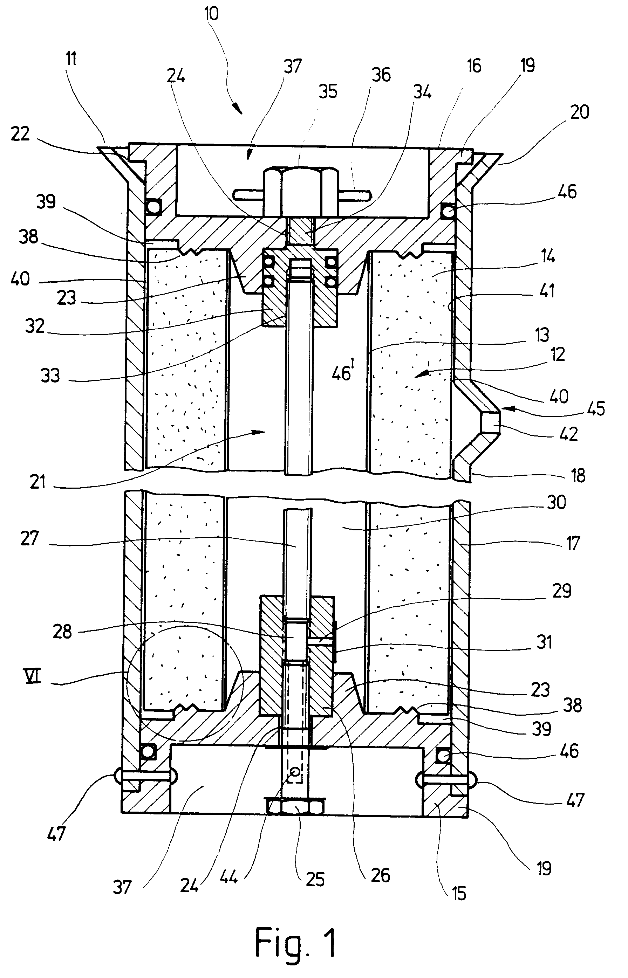

In Fig. 1 ist mit 10 ein Nebenstrom-Ölfilter im Längsschnitt gezeigt. Der Ölfilter ist in Fig. 1 schematisch und nicht maßstabsgerecht dargestellt.

Der Ölfilter 10 umfaßt ein Filtergehäuse 11, in das eine Filterpatrone 12 eingesetzt ist, die eine Innenhülse 13 und darauf aufgewickeltes Filtermaterial 14 aufweist.

Das Filtergehäuse 11 umfaßt ein Bodenteil 15 sowie ein Deckelteil 16, zwischen denen sich ein rohrförmiges Gehäuseteil 17 in Form eines Rohrstückes 18 erstreckt. Bodenteil 15 und Deckelteil 16 sind identische Deckel 19, die auf die offenen Enden des Rohrstückes 18 aufgesetzt sind. In Fig. 1 ist gezeigt, daß das Rohrstück 18 an seinem oberen Ende einen aufgebördelten Rand 20 aufweist, der das Einführen der Filterpatrone 12 in das Filtergehäuse 11 erleichtern soll. Dieser aufgebördelte Rand 20 ist jedoch nicht zwingend erforderlich, das Rohrstück 18 kann auch als zylindrisch durchgehendes Rohr von einem Endlosrohr abgelängt sein.

In dem Inneren des Filtergehäuses 11 ist eine Zugstangenanordnung 21 vorgesehen, über die die beiden Deckel 19 so miteinander verschraubt sind, daß sie die Filterpatrone 12 zwischen sich einklemmen. Je nach Bauhöhe der Filterpatrone verbleibt dabei zwischen dem oberen Deckelteil 16 und dem Rand 20 ein verschieden großer Spalt 22.

Zur Zentrierung der Filterpatrone 12 sind innen an beiden Deckeln 19 kegelförmige Zentrierblöcke 23 vorgesehen, in denen jeweils mittig eine Öffnung 24, 24' sitzt, wobei die Öffnung 24 in dem als Bodenteil 15 dienenden Deckel 19 gleichzeitig die Auslaßöffnung für das gefilterte Medium ist. In diese Auslaßöffnung ist von außen eine Hohlschraube 25 eingesteckt, die innen mit einer Hülse 26 verschraubt ist, so daß diese Hülse 26 fest in einer Vertiefung in dem Zentrierblock 23 sitzt. Alternativ kann die Hülse 26 auch in diese Vertiefung eingeklemmt oder eingeklebt sein.

Anderen Endes ist in die Hülse 26 eine Zugstange 27 so eingeschraubt, daß zwischen Zugstange 27 und Hohlschraube 25 ein Freiraum 28 verbleibt, in den eine Kalibrierbohrung 29 hineinführt, die den Freiraum 28 so mit dem Innenraum 30 der Innenhülse 13 verbindet. Auf der Kalibrierbohrung 29 sitzt ein Schutzgitter 31, das z. B. mittels einer nicht gezeigten Schelle auf der Hülse 26 festgeklemmt sein kann.

Als Gegenstück zu der Hülse 26 ist an dem als Deckelteil 16 dienenden Deckel innen ein drehbar gelagertes Teil 32 vorgesehen, das eine mit Gewinde versehene Sackbohrung 33 aufweist, in die die Zugstange 27 eingeschraubt ist. Das drehbar gelagerte Teil 32 ragt mit einem Gewindezapfen 34 durch die Bohrung 24' hindurch nach außen und ist dort in eine Hutmutter 35 eingeschraubt. Durch die Hutmutter 35 und dem Gewindezapfen 34 erstreckt sich ein Knebel 36, der für eine drehfeste Verbindung zwischen der Hutmutter 34 und dem Teil 32 sorgt. Die Zugstange 27 ist auf an sich bekannte Weise entweder in der Hülse 26 oder in der Sackbohrung 33 fixiert.

In Fig. 1 ist ferner zu erkennen, daß jeder Deckel 19 eine außenliegende Vertiefung 37 aufweist, in der bei dem Deckelteil 16 die Hutmutter 35 und bei dem Bodenteil 15 die Hohlschraube 25 angeordnet ist.

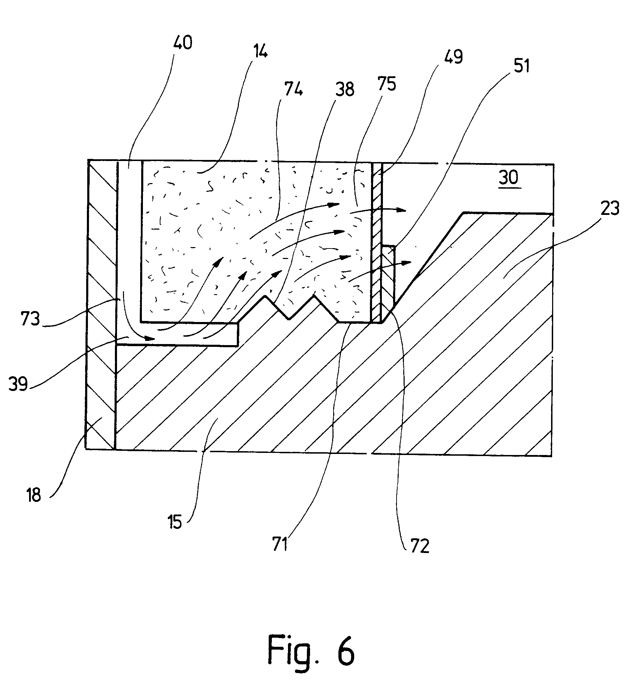

Ferner sind an beiden Deckeln 19 je zwei axial nach innen vorspringende und radial umlaufende Schneiden 38 vorgesehen, die zusammen mit einem in Fig. 6 näher beschriebenen Bund die Filterpatrone 12 mit einem axialen Spalt 39 zu den Deckeln 19 beabstandet halten. Ferner ist ein radialer Spalt 40 zwischen einer Mantelfläche 41 des Filtermaterials 14 und einer Wand 43 des Rohrstückes 18 vorgesehen. In dieser Wand 43 sitzt seitlich eine Einlaßöffnung 42, über die das zu filternde Medium in das Innere des Filtergehäuses 11 geleitet wird. Das Medium tritt über einen Auslaß 44 aus der Hohlschraube 25 wieder aus, wobei das Schutzgitter 31 die Kalibrierbohrung vor sich ggf. ablösendem Filtermaterial 14 schützt.

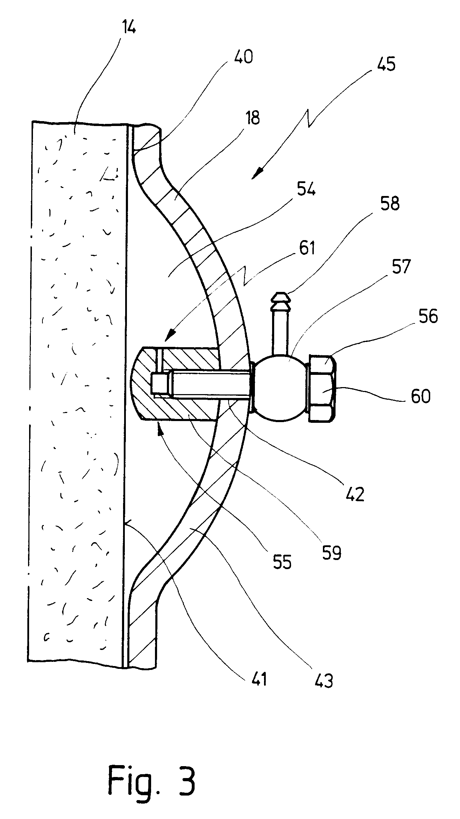

Es ist zu erkennen, daß die Wand 43 im Bereich der Einlaßöffnung 42 eine Ausstülpung 45 nach außen aufweist, deren Zweck unten im Zusammenhang mit den Figuren 3 - 5 erklärt wird.

Zum Wechseln der Filterpatrone 12 ist lediglich über den Knebel 36 und die Hutmutter 35 das drehbar gelagerte Teil 32 zu drehen, so daß die Zugstange 27, die eine einfache Gewindestange ist, entweder aus der Sackbohrung 33 oder aus der Hülse 26 freikommt. Danach kann das Deckelteil 16 an der Hutmutter 35 oder dem Knebel 36 gegriffen und von dem Rohrstück 18 abgehoben werden. Die Zugstange 27 verbleibt dabei entweder in der Hülse 26 oder in der Sackbohrung 33.

Jetzt kann die Filterpatrone 12 herausgenommen und eine neue Filterpatrone auf den unteren Zentrierblock 23 gesetzt werden. Das Deckelteil 16 wird wieder auf das Filtergehäuse 11 aufgesetzt und mittels der Zugstangenanordnung 21 wieder mit dem Bodenteil 15 verschraubt, so daß die Filterpatrone 12 zwischen den beiden Deckeln 19 wieder eingeklemmt wird.

Auf beiden Deckeln 19 sitzen O-Ringe 46, die dafür sorgen, daß das Filtergehäuse 11 dicht verschraubt wird, sofern der Spalt 22 sich in den mechanisch vorgegebenen Grenzen hält. Weitere O-Ringe 46' sind an dem drehbar gelagerten Teil 32 vorgesehen, so daß im Bereich der Bohrung 24' kein Öl nach oben austreten kann.

Durch geeignete Dichtungen im Bereich der Hohlschraube 25, auf die ein in Fig. 1 nicht dargestellter Ringnippel aufgesetzt wird, wird ebenfalls verhindert, daß hier Öl austritt.

In Fig. 1 ist weiter zu sehen, daß das Bodenteil 15 über Blindnieten 47 unverlierbar mit dem Rohrstück 18 verbunden ist.

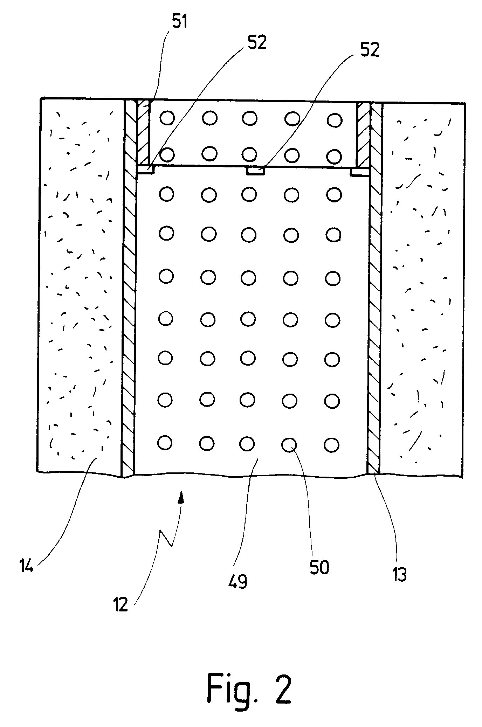

Eine besonders gute Ausnutzung des vorhandenen Filtermaterials 14 ergibt sich, wenn die in Fig. 2 im abgebrochenen Querschnitt gezeigte Filterpatrone 12 verwendet wird. Bei dieser Filterpatrone 12 besteht die Innenhülse 13 aus einem Lochblech 49, das aus Metall oder Kunststoff gefertigt sein kann. Die Innenhülse 13 ist vollständig mit Löchern 50 durchsetzt, die ggf. auch in einem Pappring 51 zu finden sind, der oben in die Innenhülse 13 eingesetzt ist. Die Stabilität erhält die Filterpatrone 12 durch die aus Lochblech 49 gefertigte Innenhülse 13, so daß bei dem Pappring 51 die Löcher 50 bis zum äußeren Rand gehen können, ohne daß es Stabilitätsprobleme gibt. Der Pappring 51 ist durch Laschen 52 gehalten, die durch Ausstanzen und Nach- Innenbiegen aus dem Lochblech 49 hervorstehen. Aufgabe des Pappringes 51, der übrigens an beiden axialen Enden der Filterpatrone 12 vorgesehen ist, ist es, für einen guten und dichten Sitz der Filterpatrone 12 auf dem jeweiligen Zentrierblock 23 zu sorgen, so daß kein ungefiltertes Medium zwischen der Filterpatrone 12 und dem Zentrierblock 23 hindurch in den Innenraum 30 gelangen kann. Zwar reichen an sich die Schneiden 38 aus, um diese Abdichtung zu erzielen, aber wenn keine Schneiden 38 vorgesehen sind oder wenn eine höhere Dichtung ermittelt werden soll, sind die Pappringe 51 von Vorteil. Durch die besondere Ausgestaltung der neuen Filterpatrone 12 kann auch das Filtermaterial 14 in den axialen Endbereichen der Filterpatrone 12 eine radiale Filterwirkung entfalten.

In Fig. 3 ist gezeigt, daß die Ausstülpung 45 einen Verteilerraum 54 für das einströmende Öl bildet. In dem Verteilerraum 54 ist eine Umlenkvorrichtung 55 vorgesehen, die dafür sorgt, daß das radial einströmende Öl nicht unmittelbar auf die Filterpatrone 12 auftrifft, so daß kein Filtermaterial 14 ausgelöst wird.

Eine Hohlschraube 56 mit darauf angeordnetem Ringnippel 57, der wiederum einen Schlauchanschluß 58 aufweist, erstreckt sich durch die Einlaßöffnung 42 und ist dort mit einer Hutmutter 59 verschraubt. Die insoweit beschriebene Hohlschraubenanordnung 60 umfaßt einen in der Hutmutter 59 vorgesehenen Einlaßkanal 61, der abgewinkelt verläuft, so daß der austretende Ölstrahl nicht direkt auf das Filtermaterial 14 auftrifft.

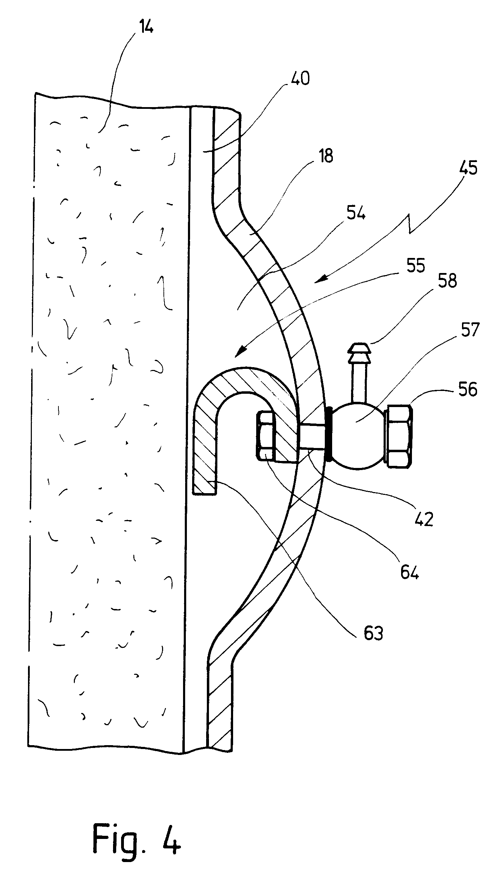

In Fig. 4 ist in einem weiteren Ausführungsbeispiel der Umlenkvorrichtung 55 ein U-förmiges Prallblech 63 gezeigt, das mittels einer Mutter 64 und der Hohlschraube 56 befestigt ist. Hier tritt der Ölstrahl radial nach innen in den Verteilerraum 54 ein, trifft dort auf das Prallblech 63 und wird so umgelenkt, daß er nicht sofort und unmittelbar auf das Filtermaterial 14 trifft. Selbstverständlich kann das Prallblech 23 auch durch Punktschweißen geeignet an der Wand 43 befestigt sein.

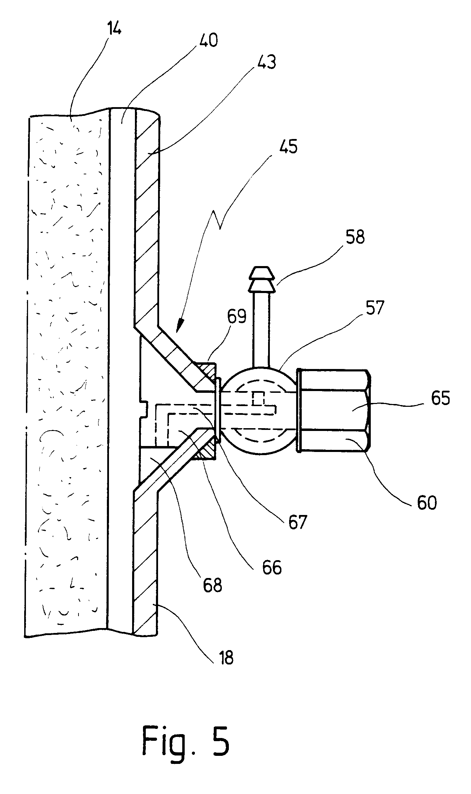

Alternativ kann die Hohlschraubenanordnung 60 auch eine Senkkopf-Hohlschraube 66 umfassen, die mit ihrem Schaft nach außen weist und dort einen Ringnippel 57 trägt, der mittels einer Hutmutter 65 verschraubt ist, wie dies in Fig. 5 gezeigt ist. Der abgewinkelte Kanal 67 liegt jetzt in dem im Inneren des Filtergehäuses 11 befindlichen Kopf der Senkschraube. Der Kanal 67 mündet in einem ausgesparten Bereich 68 des Kopfes der Senkschraube 66. Zwischen der Ausstülpung 45 und dem Ringnippel 57 ist noch ein Distanzstück 69 vorgesehen, das für eine gute Abdichtung sorgt.

Die Wirkungsweise des insoweit geschilderten Ölfilters 10 zeigt Fig. 6: Das zu filternde Öl gelangt über die Einlaßöffnung 42 in den radialen Spalt 40 zwischen Mantelfläche 41 und Wand 43 und verteilt sich so um die gesamte Filterpatrone 12 herum. Dabei gelangt das Öl auch in die axialen Spalten 39 oberhalb und unterhalb der Filterpatrone 12. Durch den Druck des nachströmenden Öles wird das Öl jetzt sowohl radial als an den axialen Enden auch axial in das Filtermaterial 14 hineingedrückt, so daß es in den Innenraum 30 gelangt. Von dort fließt es über die Kalibrierbohrung 29 und den Freiraum 28 in den Hohlschraube 25, die es durch den Auslaß 24 verläßt. Pfeile 72, 73 und 74 deuten den Weg des Öles durch die Filterpatrone 12 an. Durch die spezielle Anordnung der Schneiden 38 ist dafür gesorgt, daß in den axialen Endbereichen der Filterpatrone 12 eine gewisse axiale Filterwirkung erzielt wird, so daß hier insgesamt eine vollständige Ausnutzung des vorhandenen Filtermaterials 14 erfolgt.

Fig. 6 zeigt ferner, daß die Zentrierblöcke 23 von einem ringförmigen Bund 71 umgeben sind, auf dem die Filterpatrone 12 mit einem Teil ihrer Stirnseite aufliegt. Der Pappring 51 drückt auf die Kegelfläche 72 der Zentrierblöcke 23 und verformt sich dabei geringfügig, um so die erwähnte Abdichtung zu erreichen. Auch ohne die Schneiden 38 wäre durch die Pappringe 51 die Abdichtung ausreichend. Sind jedoch Schneiden 38 vorhanden, so kann ggf. auf die Pappringe 51 verzichtet werden.

Es sei noch bemerkt, daß die Geschwindigkeit, mit der das Öl durch den Filter 10 hindurchströmt, durch den Durchmesser und die Länge der Kalibrierbohrung 29 bestimmt wird. Dadurch, daß die Kalibrierbohrung 29 an der Hülse 26 angeordnet ist, läßt sich die Kalibrierbohrung 29 leicht gesondert von dem Deckel 19 herstellen, was insbesondere produktionstechnisch von Vorteil ist.

## Patentansprüche

1. Filter zum Filtern von gasförmigen und/oder flüssigen Medien, insbesondere Nebenstrom-Ölfilter (10) für Verbrennungsmotoren, mit einem Filtergehäuse (11), das ein Gehäuseteil (17), ein Bodenteil (12), ein Deckelteil (16) sowie eine Einlaßöffnung (42) und eine in dem Bodenteil (15) angeordnete Auslaßöffnung (24) für das Medium aufweist, und das für die Aufnahme und Halterung eines Filtereinsatzes bzw. einer Filterpatrone (12) eingerichtet ist,
dadurch gekennzeichnet, daß das Gehäuseteil (17) ein Rohrstück (18) ist, und daß das Deckelteil (16) und das Bodenteil (15) als im wesentlichen identische Deckel (19) ausgebildet sind, die direkt miteinander verschraubbar sind, um den Filtereinsatz bzw. die Filterpatrone (12) zwischen sich einzuklemmen.

2. Filter nach Anspruch 1, dadurch gekennzeichnet, daß an dem Rohrstück (18) seitlich in seiner Wand (43) die Einlaßöffnung (42) angeordnet ist.

3. Filter nach Anspruch 2, dadurch gekennzeichnet, daß die Deckel (19) über eine Zugstangenanordnung (21) miteinander verschraubbar sind.

4. Filter nach Anspruch 3, dadurch gekennzeichnet, daß die Zugstangenanordnung (21) eine innen an dem als Bodenteil (15) dienenden Deckel (19) angeordnete Hülse (26) mit Innengewinde umfaßt, in die einen Endes eine Zugstange (27) einschraubbar ist und die anderen Endes mit der Auslaßöffnung (24) kommuniziert, wobei die Hülse (26) eine seitliche Kalibrierbohrung (29) aufweist, über die das Medium zu der Auslaßöffnung (24) gelangt.

5. Filter nach Anspruch 4, dadurch gekennzeichnet, daß an dem als Deckelteil (16) dienenden Deckel (19) innen drehbar ein Teil (32) gelagert ist, das eine Gewindesackbohrung (33) zur Aufnahme der Zugstange (27) aufweist und von außen drehbar ist.

6. Filter nach einem der Ansprüche 1 bis 5, dadurch gekennzeichnet, daß innen an jedem Deckel (19) zumindest eine, vorzugsweise zwei axial vorspringende und radial zumindest teilweise umlaufende Schneiden (38) vorgesehen sind, die vorzugsweise auf einem vorspringenden Bund (71) sitzen und zusammen mit diesem den Filtereinsatz bzw. die Filterpatrone (12) fixieren und mit einem axialen Spalt (39) zu dem Deckel (19) beabstandet halten.

7. Filter nach einem der Ansprüche 2 bis 6, dadurch gekennzeichnet, daß das Rohrstück (18) im Bereich der Einlaßöffnung (42) zur Bildung eines Verteilerraumes (54) für das Medium nach außen vorgewölbt oder ausgestülpt ist, und daß eine Umlenkvorrichtung (55) vorgesehen ist, die das überwiegend radial einströmende Medium umlenkt.

8. Filter nach Anspruch 7, dadurch gekennzeichnet, daß die Umlenkvorrichtung (55) ein Prallblech (63) umfaßt.

9. Filter nach Anspruch 7, dadurch gekennzeichnet, daß die Umlenkvorrichtung (55) eine Hohlschraubenanordnung (60) mit abgewinkelt verlaufendem Einlaßkanal (61) umfaßt.

10. Filter nach einem der Ansprüche 1 bis 9, dadurch gekennzeichnet, daß der als Bodenteil (15) dienende Deckel (19) unverlierbar, vorzugsweise über Nieten (47) an dem Rohrstück (18) befestigt ist.

11. Filterpatrone, vorzugsweise zur Verwendung in dem Filter nach einem der Ansprüche 1 bis 10, mit einer perforierten Innenhülse (13), auf die Filtermaterial (14) aufgebracht ist,
dadurch gekennzeichnet, daß die Innenhülse (13) im wesentlichen aus einem Lochblech (49) aus Metall oder Kunststoff gefertigt ist.

12. Filterpatrone nach Anspruch 11, dadurch gekennzeichnet, daß in die Innenhülse (13) an ihren beiden axialen Enden jeweils ein Pappring (51) eingesetzt ist.

13. Filterpatrone nach Anspruch 12, dadurch gekennzeichnet, daß im Bereich der axialen Enden Teile der Innenhülse (13) als Laschen (52) nach innen gebogen sind, um die Pappringe (51) axial zu halten.
